(19) Europäisches Patentamt
European Patent Office
Office européen des brevets

(11) EP 1 693 353 A1

(12) # EUROPEAN PATENT APPLICATION
published in accordance with Art. 158(3) EPC

(43) Date of publication:
**23.08.2006 Bulletin 2006/34**

(21) Application number: **04746499.5**

(22) Date of filing: **25.06.2004**

(51) Int Cl.:
***C04B 24/26*** *(2006.01)* ***C04B 28/02*** *(2006.01)*
*C08L 33/14* *(2006.01)*

(86) International application number:
**PCT/JP2004/009030**

(87) International publication number:
**WO 2006/011181 (02.02.2006 Gazette 2006/05)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicants:
- **Sika Ltd.**
**Hiratsuka-shi,**
**Kanagawa 254-0021 (JP)**
- **TOHO CHEMICAL INDUSTRY CO., LTD.**
**Tokyo 104-0044 (JP)**

(72) Inventors:
- **BANDOH, Hirofumi**
**Chigasaki-shi,**
**Kanagawa 2530055 (JP)**
- **DANZINGER, Wernher M.**
**Hiratsuka-shi,**
**Kanagawa 2540034 (JP)**
- **IMAMURA, Jun**
**2540014 (JP)**
- **SAITOH, Kaname**
**Yokohama-shi,**
**Kanagawa 2440004 (JP)**
- **TOMOYOSE, Tetsu**
**2530086 (JP)**
- **KOBAYASHI, Atsushi**
**2540019 (JP)**
- **IKEDA, Akira**
**2730026 (JP)**
- **KOSHISAKA, Seiichi**
**2990114 (JP)**

(74) Representative: **Schaad, Balass, Menzl & Partner AG**
**Dufourstrasse 101**
**Postfach**
**8034 Zürich (CH)**

(54) **CEMENT DISPERSANT AND CONCRETE COMPOSITION CONTAINING THE DISPERSANT**

(57) [Object] To provide a cement dispersant and a concrete composition containing the cement dispersant, the cement dispersant having a superior effect of decreasing a high concrete paste viscosity while a water reducing effect, a slump flow retention, and rapid strength development are being satisfied in a region having a low water/binder ratio.

[Solving Means] The cement dispersant for ultrahigh performance concrete is provided which is a water-soluble amphoteric copolymer obtained by copolymerizing (A) an alkylene oxide adduct of a polyamide polyamine having an unsaturated group, (B) (meta)acrylic acid or a salt thereof, (C) an ester of a short-chain alkylene glycol and (meth)acrylic acid, and (D) an ester of a long-chain alkylene glycol and (meth)acrylic acid at ratios A:B:C:D of 5 to 25:5 to 30:5 to 40: 20 to 80 (percent by weight), in which the total is 100% percent by weight. In addition, the concrete composition containing the above cement dispersant is provided.

EP 1 693 353 A1

## Description

### Technical Field

The present invention relates to a cement dispersant and a concrete composition containing the dispersant. In more particular, the present invention relates to a cement dispersant suitably used for ultrahigh performance concrete and to a concrete composition, such as a ultrahigh performance concrete composition, containing the above dispersant. Since being a copolymer containing a polyamide polyamine group, a long-chain polyalkylene glycol group, and a short-chain polyalkylene glycol group in one molecular of the copolymer, the cement dispersant of the present invention has superior dispersibility, slump flow retention, and strength development after hardening in a region having a low water/binder ratio, and in particular, is suitably applied to ultrahigh performance concrete since the viscosity of a concrete paste which is peculiarly high in the region described above is decreased and the workability is improved thereby.

### Background Art

Heretofore, as cement dispersants, polymelamine sulfonates, lignin sulfonates, copolymers of an olefin and maleic acid, known polycarboxylic acid-base dispersants, and the like have been used. However, in recent years, since the number of building and construction works has been progressively increased in urban areas, and the situation of this business field has been changed such that, for example, the JIS on the strength required for buildings was revised, the number of buildings which require a high strength has been increased. In order to obtain a high strength structure, unlike a conventional common structure, a new concrete composition using a low-heat cement, silica fume cement or the like is frequently used for construction works, and a polycarboxylic acid-base dispersant suitably used for the above composition has been required to be improved. As major requirements for the dispersant, for example, there may be mentioned a water reducing property which is effective in construction performed at a low water/cement ratio (hereinafter referred to as W/C; and in addition, a water/binder ratio is abbreviated as W/B), slump flow retention, measures against setting retardation caused by a large amount of additives, superior strength development after hardening, and superior effect of decreasing the viscosity of a concrete paste, which effect is required since the workability thereof is degraded by a particular concrete viscosity generated as the W/C is decreased.

In order to respond to the requirements described above, various polycarboxylic acid-base cement dispersants have been proposed. For example, in Patent Document 1, a copolymer of a (meth)acrylate, (meth)acryl sulfonate, and a monoacrylic ester of a polyethylene glycol alkyl ether or a monoacrylic ester of a polypropylene glycol alkyl ether has been disclosed. In addition, according to Patent Document 2, a cement dispersant has been disclosed which contains polyalkylene glycol chains having different chain lengths in one molecule of a copolymer, and as a dispersant which satisfies both the decrease in viscosity under high-share conditions and the inhibition of setting retardation, this cement dispersant is evaluated at W/C=29.0% by using a flow value and a spreading rate (seconds) of concrete until the spread thereof reaches 50 cm. In addition, in Patent Document 3, a cement dispersant has been disclosed which contains polyalkylene glycol chains having different chain lengths in one molecule of a copolymer, and the evaluation thereof is performed using the flow value at a W/C=25%. As is the dispersant described above, in Patent Document 4, a cement dispersant has been disclosed which contains polyalkylene glycol chains having different lengths in one molecule of a copolymer, and the evaluation thereof is performed using the flow value and the air content with time elapsed at W/C=40%. Furthermore, in Patent Documents 5, 6, and 7, a cement dispersant has been disclosed which is manufactured by a polymerization method in which the molar ratio of a monomer containing a long-chain polyalkylene glycol group and the molar ratio of a monomer containing a short-chain polyalkylene glycol group are both changed at least once in the polymerization reaction.

In addition, as documents which have disclosed a cement dispersant composed of a copolymer containing a polyamide polyamine-base monomer which is the feature of the present invention, Patent Documents 8 and 9 may be mentioned. However, since the requirements for dispersants used for a high strength structure have become more demanding, supply of dispersants which can more totally satisfy the requirements has been desired.

Patent Document 1: JP-A 1-226757 (p. 1 and pp. 3-6)
Patent Document 2: Japanese Patent No. 3285526 (pp. 2-5 and 7-9)
Patent Document 3: JP-A 9-286645 (pp. 2-6)
Patent Document 4: Japanese Patent No. 3184698 (pp. 1-8)
Patent Document 5: JP-A 2002-003258 (pp. 2-6 and 8-11)
Patent Document 6: JP-A 2002-179448 (pp. 2-5 and 7-17)
Patent Document 7: JP-A 2002-179449 (pp. 2-5 and 9-20)
Patent Document 8: Japanese Patent No. 3235002 (pp. 1-8)
Patent Document 9: Japanese Patent No. 3336456 (pp. 1-11)

Disclosure of Invention

Problems to be Solved by the Invention

The present invention was made in consideration of the situation described above, and the problems of conventional cement dispersants are solved thereby. That is, an object of the present invention is to provide a cement dispersant which satisfies the water reducing effect, the slump flow retention, and rapid strength development in a well-balanced manner in a region having a low water/binder ratio, and, in particular, having a superior effect of decreasing high concrete paste viscosity, and and a concrete composition containing the above cement dispersant.

Means for Solving the Problems

Through intensive research carried out by the inventors of the present invention in order to achieve the above object, it was found that a copolymer formed from a polyalkylene polyamide monomer, a long-chain polyalkylene glycol monomer, a short-chain polyalkylene glycol monomer, and a (meth)acrylic acid-base monomer, which are contained in one molecule of the copolymer, can satisfy the desired effects, and as a result, the present invention was made.
That is, the present invention relates to:

a cement dispersant comprising a water-soluble amphoteric copolymer, or a partly or a fully neutralized salt thereof, the copolymer being formed by copolymerizing a monomer mixture containing as a primary monomer component, at least one compound (compound A) obtained by addition of 0 to 8 moles of an alkylene oxide having 2 to 4 carbon atoms with respect to one equivalent of amino residues in polyamide polyamine obtained by condensation of 1.0 mole of a polyalkylene polyamine, 0.5 to 0.95 mole of a dibasic acid or an ester of the dibasic acid with a lower alcohol having 1 to 4 carbon atoms, and 0.05 to 0.70 mole of acrylic acid or methacrylic acid, or an ester of acrylic acid or methacrylic acid with a lower alcohol having 1 to 4 carbon atoms and, at least one compound (compound B) represented by general formula (1),

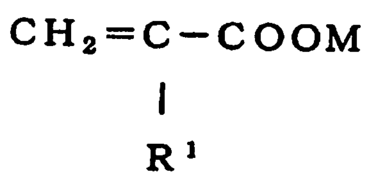

(1)

(in the formula, $R^1$ represents a hydrogen atom or a methyl group, and M represents a hydrogen atom, an alkali metal, an alkali earth metal, an ammonium group, and an alkanolammonium), at least one compound (compound C) represented by general formula (2),

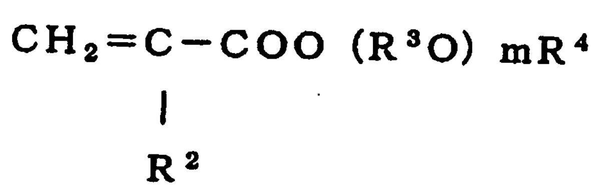

(2)

(in the formula, $R^2$ represents a hydrogen atom or a methyl group, $R^3$ represents an alkylene group having 2 to 4 carbon atoms, $R^4$ represents a hydrogen atom or an alkyl group having 1 to 4 carbon atoms, and m represents the number of addition molecules of a polyalkylene glycol and is an integer of 1 to 35), and
at least one compound (compound D) represented by general formula (3),

$$CH_2=C(R^5)-COO(R^6O)_nR^7 \qquad (3)$$

(in the formula, $R^5$ represents a hydrogen atom or a methyl group, $R^6$ represents an alkylene group having 2 to 4 carbon atoms, $R^7$ represents a hydrogen atom or an alkyl group having 1 to 4 carbon atoms, and n represents the number of addition molecules of a polyalkylene glycol and is an integer of 40 to 100).

The present invention also particularly relates to the cement dispersant of the present invention used in ultrahigh performance concrete composition. The present invention furthermore relates to a concrete composition characterized by containing the cement dispersant of the present invention and particularly relates to the concrete composition for ultrahigh performance concrete. In this specification, the ultrahigh performance concrete represents a well-conditioned concrete obtained at a low W/C.

As described above, the compound A used in the present invention is a compound formed by addition of a specific amount of an alkylene oxide (compound d) to a polyamide polyamine obtained by condensation of a polyalkylene polyamine (compound a), a dibasic acid or an ester of the dibasic acid with a lower alcohol having 1 to 4 carbon atoms (compound b), and acrylic acid or methacrylic acid, or an ester of acrylic acid or methacrylic acid with a lower alcohol having 1 to 4 carbon atoms and (compound c), in a definite proportion.

Examples of the polyalkylene polyamine of the compound a include diethylenetriamine, triethylenetetramine, tetraethylenepentamine, pentaethylenehexamine, dipropylenetriamine, tripropylenetetramine and tetrapropylenepentamine, and among those mentioned above, for example, diethylene triamine and triethylene tetramine are preferable from both points of effectiveness and economical angle.

Examples of the dibasic acid and the ester thereof with a lower alcohol having 1 to 4 carbon atoms of the compound b include malonic acid, succinic acid, fumaric acid, maleic acid, glutaric acid, adipic acid, pimelic acid, phthalic acid, azelaic acid, sebacic acid, and an ester thereof with a lower alcohol having 1 to 4 carbon atoms such as methanol, ethanol, propanol, butanol, or an isomer thereof if present.

Of those mentioned above, adipic acid is most preferable from both effectiveness and economical angle.

Examples of acrylic acid or methacrylic acid and the ester thereof with a lower alcohol having 1 to 4 carbon atoms of the compound c include acrylic acid, methacrylic acid, methyl acrylate, methyl methacrylate, ethyl acrylate, ethyl methacrylate, propyl acrylate, propyl methacrylate, butyl acrylate and butyl methacrylate.

The polyamide polyamine comprising the three components of the above compounds a, b and c can be easily obtained by the conventional polycondensation technique. In addition, the alkylene oxide having 2 to 4 carbon atoms, which is the compound d, to be added to the amino residues of the polyamide polyamine is ethylene oxide, propylene oxide or butylene oxide. Those alkylene oxide mentioned above may be used alone or in combination.

As preparation of the polyamide polyamine, that is, the polycondensation reaction of the compounds a, b and c, there are two-stage reaction method comprising polycondensation of only the compound a and the compound b, and thereafter further polycondensation with the compound c as a monobasic acid, or one-stage reaction method comprising simultaneous polycondensation with the compounds a, b, and c from the start. However, in both cases described above, since this polycondensation reaction, that is, amidization reaction proceeds in parallel with an amide interchange reaction, acrylic acid residues or methacrylic acid residues derived from the compound c is finally located at the terminal of the polyamide chain, and hence it can be assumed that the same result is obtained in the above two cases.

Next, the reaction molar ratios of the above three components constituting the polyamide polyamine will be described. The reaction molar ratio of the compound b (dibasic acid or its ester) with respect to 1.0 mole of the compound a (polyalkylene polyamine) is 0.5 to 0.95 moles. Polycondensation product of the compound a and the compound b reacted in the molar ratio defined above produces, on the average, a polyamide with a chain length in a predetermined range, comprising polycondensation of from (2 moles of a polyalkylene polyamine: 1 mole of a dibasic acid) to (20 moles of a polyalkylene polyamine: 19 moles of a dibasic acid), and therefore, a dispersant obtained by using the polyamide exhibits high water reducing property and slump flow retention. When the chain length of this polyamide is shorter than the case described above (in the case in which the reaction ratio is less than 0.5 moles), a polyamide polyamine having a predetermined structure cannot be obtained. In addition, when the chain length is longer than that described above (in the case in which the reaction ratio is more than 0.95 moles), it is not preferable since the water reducing property is remarkably degraded.

The polyamide polyamine of the present invention has 0.10 moles (in the case of a:b:c=1.0:0.5:0.05 (moles))

to 14 moles (in the case of a:b:c=1.0:0.95:0.70 (moles)) of acrylic acid residues or methacrylic acid residues per one molecule, but a preferable range is 0.5 to 2.0 moles from the standpoints of effect. When the value is less than 0.5 moles (for example, in the case of a:b=1.0:0.5, and the molar ratio of the compound c to the compound a is less than 0.25), the proportion of the compound A obtained from this ratio in the final copolymer decreases, and the property as a cement dispersant is seriously diminished. On the other hand, when the value exceeds 2.0 moles (for example, in the case of a:b=1.0:0.95, and the molar ratio of the compound c to the compound a exceeds 0.10), overformation of the three-dimensional structure of the copolymer is observed and sufficient effect cannot be obtained.

In particular, with respect to 1.0 mole of the polyalkylene polyamine, when the number of molecules of the dibasic acid or the ester of the dibasic acid with a lower alcohol having 1 to 4 carbon atoms is represented by x, and the number of molecules of acrylic acid or methacrylic acid, or the ester of acrylic acid or methacrylic acid with a lower alcohol having 1 to 4 carbon atoms is represented by y, the relationship between the two compounds in the number of molecules preferably satisfies the condition of $0.6<y/(1-x)<1.4$. In case of $0.6 \geqq y/(1-x)$, polyamide polyamine-base monomers are not sufficiently incorporated in the copolymer, and in case of $y/(1-x) \geqq 1.4$, a large amount of diamide(polyamide polyamine)-base monomers having reactive groups at both terminals is contained in the copolymer; hence, as a result, the increase in molecular weight of the copolymer and the gelation thereof occur, and in the two cases described above, a sufficient effect of decreasing the viscosity cannot be obtained.

Amount of the alkylene oxide to be added to the polyamide polyamine is 0 to 8 moles per one equivalent of the amino acid residues of the polyamidee polyamine. When the value exceeds 8 moles, molecular weight of the compound A increases with inevitable decrease in cation equivalent and sufficient effect as the amphoteric polymer expected of the present invention cannot be obtained. In the present invention, the addition of the alkylene oxide is preferably performed, and the amount thereof is preferably in the range of 0.5 to 6.0 to one equivalent of the amino acid residue of the polyamide polyamine and is particularly preferably in the range of 1.0 to 5.5.

Examples of the compound B used in the present invention include acrylic acid or methacrylic acid, or their sodium, potassium, ammonium, monoethanolamine, diethanolamine and triethanolamine slat, and among those mentioned above, acrylic acid or methacrylic acid is preferable from standpoints of effectiveness and economical efficiency.

As the form of the compound B after it is finally incorporated in the copolymer, an acid or/and a (partially or fully) neutralized salt by sodium, potassium, or ammonium is preferable in view of water-soluble properties. Neutralization may be performed after synthesis is performed in the form of an acid, or neutralization may be performed to form a salt before the polymerization.

Examples of the compound C and the compound D used in the present invention include (meth)acrylic acid esters of a methoxypolyethylene glycol, (meth)acrylic acid esters of an ethoxypolyethylene glycol, (meth)acrylic acid esters of an ethylene oxide/polypropylene oxide adduct of methanol, and mono(meth)acrylic acid esters of a polyalkylene glycol.

The number of addition molecules of the alkylene oxides for the compound C used in the present invention is 1 to 35 moles. When the number is less than 1 mole, the water solubility of the polymer is seriously degraded, and when the number is more than 35, the slump flow retention is degraded.

The number of addition molecules of the alkylene oxides for the compound D used in the present invention is 40 to 100. When the number is less than 40, the water reducing property is degraded, and when the number is more than 100, the slump flow retention is seriously degraded.

In the copolymer as the cement dispersant of the present invention, in addition to the compounds A, B, C and D, other copolymerizable monomers may also be contained. As the monomers mentioned above, the following known monomers may be mentioned. For example, examples of these monomers in include (non-)aqueous monomers such as methyl (meth)acrylate, ethyl (meth)acrylate, butyl (meth)acrylate and styrene; anionic monomers such as itaconic acid, maleic acid (anhydride), vinyl sulfonic acid, and styrene sulfonic acid; amide-base monomers such as acrylamide and alkylene oxide adducts of acrylamide; and polyalkylene glycol-base monomers such as alkylene oxide adducts of allyl alcohol, a mono- or a diester of a polyalkylene glycol and maleic anhydride, and esters of a polyalkylene glycol and itaconic acid.

The compounding proportion of the other copolymerizable monomers described above is 30 percent by weight or less of the total of all the monomers to be charged, is preferably 20 percent by weight or less, and is even more preferably 10 percent by weight or less.

The compounding proportion of compound A:compound B: compound C:compound D used in the present invention are 5 to 25 percent by weight:5 to 30 percent by weight:5 to 40 percent by weight:20 to 80 percent by weight when the total of these compounds is set to 100 percent by weight, and when the compounds in an appropriate amount are selected in accordance with the ranges described above, the water reducing property, the slump flow retention, rapid strength development, and effective decrease of a high concrete viscosity can be realized in a well-balanced manner. However, when the ratios of the compounds are out of the ranges described above, the above effects cannot be obtained.

A method for producing the cement dispersant according to the present invention is not particularly limited,

and for example, a known polymerization method, such as solution polymerization or bulk polymerization, using a polymerization initiator can be adopted.

The solution polymerization may be performed by both batch and continuous methods, and as solvents used in this polymerization, for example, water; alcohols such as methyl alcohol, ethyl alcohol, and isopropyl alcohol; aromatic and aliphatic hydrocarbons such as benzene, toluene, xylene, cyclohexane, and n-hexane; ester compounds such as ethyl acetate; ketone compound such as acetone and methyl ethyl ketone; and cyclic ether compounds such as tetrahydrofuran and dioxane are raised. However, in consideration of the solubility of starting monomers and that of the copolymer to be obtained, at least one selected from the group consisting of water and lower alcohols having 1 to 4 carbon atoms is preferably used, and among those mentioned above, water is more preferably used as the solvent.

When aqueous solution polymerization is carried out, as a radical polymerization initiator, a water-soluble polymerization initiator may be used. Examples thereof are persulfates such as ammonium persulfate, sodium persulfate and potassium persulfate; hydrogen peroxide; and water-soluble azo-base initiators including azoamidine compounds such as 2,2'-azobis(2-methylpropionamidine)hydrochloride, cyclic azoamidine compounds such as 2,2'-azobis-2-(2-imidazolin-2-yl)propane hydrochloride, and water soluble azo compounds including azonitrile compounds such as 2-carbamoylazoisobutyronitrile. In this case, for example, alkali metal sulfites such as sodium hydrogen sulfite, metabisulfite salts, sodium hypophosphite, Fe(II) salts such as Mohr's salt, sodium hydroxymethanesulfonate dihydrate, hydroxyl amine salts, thiourea, L-ascorbic acid (salt), and erysorbic acid (salt) may be additionally used as an accelerator.

In addition, in solution polymerization in which a lower alcohol, an aromatic or an aliphatic hydrocarbon, an ester compound or a ketone compound is used as a solvent, as radical polymerization initiators, for example, there may be used peroxides such as benzoyl peroxide, lauroyl peroxide, and sodium peroxide; hydroperoxide such as t-butyl hydroperoxide and cumene hydroperoxide; and azo compounds such as azobisisobutyrylonitrile. In this case, an accelerator such as an amine compound may also be used. Furthermore, when a mixed solvent of water and a lower alcohol is used, the above various radical initiators may be optionally selected together with or without an accelerator.

When bulk polymerization is performed, as radical polymerization initiators, for example, there may be used peroxides such as benzoyl peroxide, lauroyl peroxide, and sodium peroxide; hydroperoxide such as t-butyl hydroperoxide and cumene hydroperoxide; and azo compounds such as azobisisobutyrylonitrile.

The reaction temperature in copolymerization is not particularly limited; however, when a persulfate is used as an initiator, the reaction temperature is preferably in the range of 30 to 95°C.

In copolymerization, a chain transfer agent may be used. As the chain transfer agent, for example, a thiol-base chain transfer agent such as mercaptoethanol, thioglycerol, thioglycolic acid, 2-mercaptopropionic acid, 3-mercaptopropionic acid, thiomalic acid, octyl thioglycolate, octyl 3-mercaptopropionate and 2-mercaptoethanesulfonate may be used. In addition, two or more of the above chain-transfer agents may also be used together.

The polymerization time in copolymerization is not particularly limited; however, for example, the time is suitably 1 to 10 hours, preferably 1 to 8 hours, and more preferably 1.5 to 6 hours. When the polymerization time is shorter or longer than the range described above, the polymerization yield and productivity are unfavorably decreased.

A dropwise addition method in copolymerization is not particularly limited, for example, the following methods are raised: a method in which after each monomer is partly or entirely charged in a reaction vessel, an initiator and the like are dropwise added; a method in which after one or more of monomers is charged in a reaction vessel, the remaining other monomers, an initiator, a chain transfer agent and the like are dropwise added; a method disclosed in Japanese Patents No. 3235002 in which a mixture of monomers, a radical polymerization initiator and a chain transfer agent are individually dropwise added; and a method described in Japanese Patent No. 3336456 in which a mixture of monomers, a chain transfer agent and a radical polymerization initiator are individually dropwise added.

The molecular weight of the copolymer obtained in the present invention is not particularly limited; however, the weight average molecular weight (measured in terms of polyethylene glycol by a gel permeation chromatographic method) is preferably in the range of 3,000 to 500,000, and when the molecular weight is out of the above range, the dispersibility is decreased.

As the cement dispersant, the water-soluble amphoteric copolymer of the present invention thus obtained has superior water reducing property, slump flow retention, and rapid strength development in a region having a low water/binder ratio, and also has an effect of decreasing a particularly high concrete viscosity; hence, the copolymer of the present invention achieves properties which cannot be obtained by conventionally used or proposed cement dispersants. It has been believed that the effects described above can be obtained since carboxyl groups (anionic groups), polyalkylene polyamide groups (cationic groups), and non-ionic hydrophilic groups formed of long and short-chain polyalkylene glycol groups are together present in a molecular structure of the copolymer. The use of the copolymer having the unique structure described above is the fundamental concept of the present invention. In particular, synergic effect is generated by effective functions of an electrical action of the cationic group moiety of the polyamide polyamine, a hydrophilic action of hydroxide groups and a steric hindrance action of the long polyalkylene glycol, which is generated by appropriate combination thereof with the short-chain polyalkylene glycol group and therefore, even in a small amount of water in a region having a low water/binder ratio, the cement dispersant is effectively adsorbed onto an inorganic material (cement

particles), and the presence of the short-chain polyalkylene glycol group enables the long-chain polyalkylene glycol to effectively function, so that the effects described above of the present invention can be finally obtained. Furthermore, it is estimated that, since the effective function of the cement dispersant indicates that the amount thereof can be decreased, for example, the setting retardation caused by charge of an excess amount of the cement dispersant can be suppressed and that the rapid strength development can be obtained. From the above effects of the cement dispersant of the present invention, the mechanism has been estimated as described above; however, it has not been fully analyzed as of today.

Effect of Invention

As described in detail, in the region having a low water/binder ratio, since the cement dispersant of the present invention has high water reducing property, superior slump flow retention and a rapid strength development and has further an effect of decreasing a peculiar concrete viscosity, the cement dispersant of the present invention can be preferably used as a dispersant for ultrahigh performance concrete. In addition, the water-soluble amphoteric copolymer of the present invention can also be used as a high performance AE water reducing agent. Since a concrete composition containing the cement dispersant of the present invention has a significantly superior water reducing property, slump flow retention, strength development and effect of decreasing concrete viscosity, excellent on-site workability can be obtained. As described above, the present invention provides a dispersant or a water reducing agent which has been enthusiastically desired in the field described above, and the contribution of the present invention to this industrial field is significant.

Best Mode for Carrying Out the Invention

Amount of the cement dispersant composed of the water-soluble amphoteric copolymer of the present invention to be added is about 0.1 to 1.8% in terms of the solid content in a binder including a material for concrete. In particular, when the water/binder ratio is low such as that W/B is 20% or less, more than 1.0% of the cement dispersant is added in many cases. That is, the more dispersant added, the better water reducing property and the slump flow retention are. However, if the amount of the cement dispersant is too much excess, the setting retardation and in a worst case, poor hardening may be observed. The way to use the cement dispersant of the present invention is the same as in currently available general cement dispersants, and the cement dispersant of the present invention is added in the form of a stock solution at the time of kneading concrete, or in previously diluted form with kneading water. Alternatively, the cement dispersant may be added after kneading a concrete or a mortar, and the resulting mixture may again be kneaded homogenously. The present invention also provides a concrete composition containing the cement dispersant of the present invention.

Components other than the cement dispersant are conventionally used components for concrete such as ordinary Portland cement, early-strength Portland cement, low heat-moderate heat Portland cement or blast furnace cement, silica fume cement and VKC-100SF for cements; aggregates, that is, fine aggregates and course aggregate; and admixtures such as silica fume, fly ash, a calcium carbonate powder, a blast furnace slag powder, an expanding agent and water.

In addition, it is needless to say that, besides the dispersant of the present invention, a conventional cement dispersant, an air-entraining agent, a defoaming agent, a setting retarder, an accelerator, a thickening agent, a separation inhibitor, a shrinkage reducing agent, a releasing agent and the like can appropriately be compounded. The compounding proportion of each of those components can easily be determined in accordance with the type of selected component and the purpose of the use.

The dispersant of the present invention has the water reducing property, the slump flow retention and the rapid strength development in a region having a low water/binder ratio and, especially, has a superior effect of decreasing high concrete paste viscosity; however, the dispersant of the present invention can also be used in a region having a general water/binder ratio. For example, the cement dispersant of the present invention alone or in combination with a common cement dispersant may be applied to precast application or application in a region having a general water/binder ratio. In the cases described above, by the use of the cement dispersant of the present invention, improvement in initial water reducing property, and early strength development can be naturally expected.

The cement dispersant of the present invention and a common cement dispersant may be compounded together at a ratio of 1 to 99 to 99 to 1. The general compounding ratio thereof is changed in accordance with the ratio of water to the binder and the application thereof.

The common cement dispersant which can be compounded with the cement dispersant of the present invention is not particularly limited, and known cement dispersants can be used. Examples of these cement dispersants include a lignin sulfonate, a naphthalene sulfonic acid-formalin condensate salt, a melamine sulfonic acid-formalin condensate salt and a polystyrene-sulfonic acid condensate salt. In addition, as polycarboxylic acid-base dispersants, there may be mentioned, for example, a copolymer of a polyethylene glycol monoallyl ether and an unsaturated dicarboxylic acid

disclosed in JP-B 58-383380; a copolymer of a polyalkylene glycol mono(meth)acrylate and (meth)acrylic acid disclosed in JP-B 59-18338; a four-component copolymer disclosed in Japanese Patent No. 2628486 which is formed from a monomer having a sulfonic acid group at the terminal, a polyalkylene glycol mono(meth)acrylate, a polyalkylene glycol mono(meth)acrylate and (meth)acrylic acid; a copolymer of a polyalkylene glycol mono(meth)acrylate and (meth)acrylic acid disclosed in Japanese Patent No. 2774445; and a copolymer having a polyamide polyamine-base monomer disclosed in Japanese Patent No. 3235002 and Japanese Patent No. 3336456.

In order to obtain a well-conditioned concrete composition, an air-entraining agent, a setting retarder, an accelerator, a separation inhibitor, a thickening agent and the like are generally compounded. In this specification, a cement dispersant different from the cement dispersant of the present invention and those additives mentioned above are all called different additives for mortar and concrete.

Accordingly, the present invention also provides an admixture for mortar and concrete composed of the cement dispersant of the present invention and the different additives for mortar and concrete described above, and a concrete composition containing the above admixture for mortar and concrete.

As the different additives for mortar and concrete except for the cement dispersant, for example, as described above, the air-entraining agent, the defoaming agent, the setting retarder, the accelerator, the thickening agent and the separation inhibitor are mentioned. Those additives may be compounded with the cement dispersant of the present invention before the formation of a concrete paste or may be compounded with kneading water.

When the different additives for mortar and concrete are particularly described, as the air-entraining agent, for example, (1) an anionic air-entraining agent, (2) a nonionic air-entraining agent, and (3) an amphoteric air-entraining agent composed of anions and cations may be generally mentioned. As the anionic air-entraining agents (1), higher alcohol(alkoxylate)sulfuric acid ester, resin soap salts, higher alcohol(alkoxylate)phosphoric acid ester and the like may be mentioned; as the nonionic air-entraining agents (2), polyalkylene glycols, alkylene oxide adducts of a higher alcohol, esters of a fatty acid and a polyalkylene glycol, alkylene oxide adducts of a sugar alcohol-fatty acid ester, and the like may be mentioned; and as the amphoteric air-entraining agents (3) composed of anions and cations, for example, an alkyl betaine type, an alkylamide betaine type, and an amino acid-base amphoteric activator type may be mentioned. However, the air-entraining agent is not limited thereto.

Concrete examples of the defoaming agent as one of the different additives for mortar and concrete are (1) an activator-base defoaming agent, (2) a silicone-base defoaming agent, and (3) a mineral oil-base defoaming agent. As the activator-base defoaming agents (1), polyalkylene glycols, alkylene oxide adducts of a higher alcohol, esters of a fatty acid and an alkylene oxide adduct of a higher alcohol, esters of a polyalkylene glycol and a fatty acid, and the like may be mentioned; as the silicone-base defoaming agents (2), dimethyl silicones, silicone emulsions and the like may be mentioned; and as the mineral oil-base defoaming agents (3), mineral oil emulsions, paraffin wax emulsions, higher alcohol emulsions and the like may be mentioned.

Concrete examples of the setting retarder as one of the different additives for mortar and concrete are (1) inorganic setting retarders such as phosphates, silicon fluoride compounds, zinc oxide, zinc carbonate, zinc chloride, zinc monoxide, copper hydroxide, magnesium salts, borax, boron oxide and the like; and (2) organic setting retarders such as phosphonic acid derivatives, sugar and its derivatives, hydroxycarboxylates and lignin sulfonates. When the setting retarder is more particularly described, there may be mentioned phosphonic acid derivatives such as aminotri (methylene phosphonic acid), aminotri(methylene phosphonic acid)pentasodium salt, 1-hydroxyethylidene-1,1-diphosphonic acid, ethylenediaminetetra(methylene phosphonic acid), diethylenetriaminepenta(methylene phosphonic acid), and phosphonates of an alkali metal and an alkali earth metal and the derivatives thereof; sugars such as saccharose, maltose, raffinose, lactose, glucose, fructose, mannose, arabinose, xylose, abitose and ribose; and hydroxycarboxylates such as gluconic acid, citric acid, glucoheptonic acid, malic acid, an tartaric acid, and alkali metal salts and alkali earth metal salts thereof. The preferable amount of this agent for addition is 0.1 to 20 parts by weight with respect to the binder such as cement.

Examples of the accelerator as one of the different additives for mortar and concrete are inorganic accelerators such as calcium chloride, calcium nitride and calcium nitrite, and organic accelerators such as alkanolamines.

Examples of the thickening agent and separation inhibitor as one of the different additives for mortar and concrete are (1) cellulose-base water-soluble polymers such as cellulose ethers (MC and the like), (2) polyacrylamide-base water-soluble polymers such as polyacrylamides, (3) biopolymers such as curdlan and welan gum(3)non-ionic thickening agents such as fatty acid diesters of a polyalkylene glycol and urethane condensates of a polyalkylene glycol. The preferable compounding ratio of this agent is 0.5 to 3.0 kg/$m^3$ with respect to the inorganic material.

EXAMPLES

Hereinafter, the present invention will be described in detail with reference to the examples; however, the present invention is not limited thereto.

EXAMPLE 1

<Method for Forming Compound A-1>

Into a reaction vessel equipped with a stirrer, 103 g (1.00 mole) of diethylenetriamine and 97.3 g (0.67 moles) of adipic acid were charged, and the mixture thus obtained was mixed together by stirring in a nitrogen atmosphere by introduction of nitrogen. The temperature was increased to 150˚C, and the reaction was continued for 20 hours until the acid value reached 22 while removing water of the reaction accompanied with product generated by polycondensation. Next, 1.1 g of hydroquinone methyl ether and 27.5 g (0.32 moles) of methacrylic acid were charged and were allowed to react at the same temperature (150˚C) for 10 hours. Accordingly, 187 g of a polyamide polyamine (melting point of 122˚C, acid value of 23) was obtained together with 42 g in total of reaction distilled water. The total amount of the polyamide polyamine thus obtained was dissolved in 272 g of water, and the temperature was increased to 50˚C. Furthermore, 220 g of ethylene oxide (corresponding to 3.0 moles to the total amino residues including unreacted amino groups) was sequentially added over 4 hours at the same temperature (50˚C), and matured for 2 hours. Accordingly, 680 g (solid content of 60%) of the compound A-1 of the present invention was obtained.

<Method 1 for Manufacturing Copolymer>

Into a reaction vessel equipped with a stirrer, 180 g of water was charged, and while nitrogen was introduced to make the inside of synthesis system to be nitrogen atmosphere, and the temperature was increased to 80˚C. A mixture of 150 g of water, 98.2 g of the compound A-1, 72.0 g of methacrylic acid (compound B), 60.9 g of a short-chain methoxypolyethylene glycol monomethacrylate (compound C, molecular weight of 1000), and 183 g of a long-chain methoxypolyethylene glycol monomethacrylate (compound D, molecular weight of 2000), (when the compound B was assumed to be a Na salt, the ratios of the compound A: compound B: compound C: compound D were 15 percent by weight: 23 percent by weight: 15 percent by weight: 47 percent by weight, and the total was 100 percent by weight), and 66.4 g of a 5% thioglycolic acid aqueous solution were individually dropwise added to the synthesis system over 2 hours, and in addition, 123 g of an aqueous sodium persulfate solution at a concentration of 5% was also dropwise added to the synthesis system over 3 hours. After completion of the dropwise addition, maturation and cooling were performed for 2 hours. Subsequently, neutralization was performed using a 48% NaOH aqueous solution until a pH of 7 was obtained, thereby obtaining 1,029 g of a water-soluble amphoteric copolymer (copolymer (A): hereinafter referred to as "copolymer of Example 1" in some cases). This copolymer (A) was a copolymer having a weight average molecular weight of 46,000 which was measured by GPC molecular weight measurement. The measurement conditions are as follows.

Column: OHpak SB-803HQ, OHpak SB-804HQ (manufactured by Showa Denko K. K.)
Eluent: a 50-mM sodium nitrate aqueous solution and acetonitrile at a ratio of 80:20
Detector: Differential refractometer
M.W. Calibration Standard: Polyethylene glycol

<Method 2 for Manufacturing Copolymer>

Into a reaction vessel equipped with a stirrer, 180 g of water was charged, and while nitrogen was introduced to make the inside of synthesis system to be nitrogen atmosphere and the temperature was increased to 80˚C. A mixture of 66.4 g of a 5% thioglycolic acid aqueous solution and 150 g of water, 98.2 g of the compound A-1, 72.0 g of methacrylic acid (compound B), 60.9 g of a short-chain methoxypolyethylene glycol monomethacrylate (compound C, molecular weight of 1000) and 183 g of a long-chain methoxypolyethylene glycol monomethacrylate (compound D, molecular weight of 2,000) (when the compound B was assumed to be a Na salt, the ratios of the compound A: compound B: compound C: compound D were 15 percent by weight: 23 percent by weight: 15 percent by weight: 47 percent by weight, and the total was 100 percent by weight), and 82 g of a 5% sodium persulfate aqueous solution were dropwise added to the synthesis system over 2 hours. Next, 41 g of a 5% sodium persulfate aqueous solution was dropwise added over 1 hour. Subsequently, ageing and cooling was performed for 2 hours. Then, neutralization was performed using an aqueous NaOH solution at a concentration of 48% until a pH of 7 was obtained, thereby obtaining 1,029 g of a water-soluble amphoteric copolymer (copolymer (B)). This copolymer (B) was a copolymer having a weight average molecular weight of 45,000 which was measured by GPC molecular weight measurement. The measurement conditions are as follows.

Column: OHpak SB-803HQ, OHpak SB-804HQ (manufactured by Showa Denko K. K.)
Eluent: 50-mM sodium nitrate aqueous solution and acetonitrile at a ratio of 80:20
Detector: Differential refractometer
M.W. Calibration Standard: Polyethylene glycol

<Comparison between the copolymers (A) and (B) obtained by the manufacturing methods 1 and 2>

The copolymers (A) and (B) obtained by the manufacturing methods 1 and 2, respectively, were almost equivalent to each other in view of the GPC measurement results, and it can be assumed that the same compound was obtained.

Examples 2-10

By using compounds shown in Table 1 in accordance with the individual ratios, compounds A-2 to A-6, which were polyamide polyamine alkylene oxide adduct compounds, were obtained in the same manner as that of the method for obtaining the compound A-1 in Example 1. In addition, by using the compound A, the compound B, the compound C, and the compound D shown in Table 2 in accordance with the individual ratios, copolymerization was conducted in the same manner as that of the manufacturing method 1 in Example 1, thereby obtaining water soluble amphoteric copolymers (Examples 2-10) (however, water contents of the copolymers thus obtained were each adjusted so as to have a solid content of 40% as the final concentration).

[Table 1] Synthetic Examples *1 of Compounds A-1 to A-4

| Compound A | | A-1 | A-2 | A-3 | A-4 | A-5 | A-6 |
|---|---|---|---|---|---|---|---|
| (a) | DETA *2 | 1.00 | 1.00 | 1.00 | - | 1.00 | - |
| | TETA *3 | - | - | - | 1.00 | - | 1.00 |
| (b) | Adipic Acid | 0.67 | 0.83 | 0.83 | - | 0.80 | 0.91 |
| | Dimethyl Adipate | - | - | - | 0.91 | - | - |
| Acid Value of Intermediate Condensate *4 | | 22 | 19 | 17 | n.d. | 20 | 20 |
| (c) | Acrylic Acid | - | 0.13 | - | - | - | - |
| | Methacrylic Acid | 0.32 | - | 0.17 | - | 0.25 | 0.10 |
| | Methyl Methacrylate | - | - | - | 0.10 | - | - |
| | y/(1-x) | 0.9 | 0.8 | 1.0 | 1.1 | 1.3 | 1.1 |
| Acid value of Final Condensate *5 | | 23 | 19 | 17 | n.d. | 22 | 20 |
| (d) | Ethylene Oxide | 3.0 | 3.0 | 2.0 | 5.0 | 4.0 | 5.0 |
| | Propylene Oxide | - | 1.0 | - | 1.0 | - | 1.0 |

*1 Components (a) to (d) used for producing the compounds A shown in the table correspond to the compounds a to d described above, and the values each represent a molar ratio.

*2 Diethylenetriamine

*3 Triethylenetetramine

*4 Acid value of the condensate (intermediate condensate) of the compounds a and b

*5 Acid value of the condensate (final condensate) of the compounds a, b and c

[Table 2] Examples 1 to 10 *1

| Example No. | 1 | 2 | 3 | 4 | 5 | 6 | 7 | 8 | 9 | 10 |
|---|---|---|---|---|---|---|---|---|---|---|
| Compound A | | | | | | | | | | |
| A-1 | 15 | 15 | - | - | - | - | - | - | - | - |
| A-2 | - | - | - | - | - | - | 15 | - | - | - |
| A-3 | - | - | 8 | 5 | 5 | 10 | - | - | - | - |
| A-4 | - | - | - | - | - | - | | 10 | - | - |
| A-5 | - | - | - | - | - | - | - | - | 12 | - |
| A-6 | - | - | - | - | - | - | - | - | - | 20 |
| Compound B | | | | | | | | | | |
| Na Acrylate | - | - | - | - | - | 2 | 5 | - | - | - |
| Na Methacrylate | 23 | 23 | 13 | 14 | 14 | 20 | 20 | 20 | 14 | 10 |

(continued)

| | | | | | | | | | | |
|---|---|---|---|---|---|---|---|---|---|---|
| Compound C | | | | | | | | | | |
| C-1 *2 | - | 31 | - | - | - | - | - | - | - | 10 |
| C-2 *3 | 15 | - | 20 | 20 | 8 | - | - | 25 | 34 | - |
| C-3 *4 | - | - | - | - | - | - | - | - | - | 5 |
| C-4 *5 | - | - | - | - | - | 31 | 18 | - | - | - |
| Compound D | | | | | | | | | | |
| D-1 *6 | 47 | 31 | 59 | 61 | 73 | 47 | - | 25 | - | 20 |
| D-2 *7 | - | - | - | - | - | - | 42 | - | 40 | 35 |
| D-3 *8 | - | - | - | - | - | - | - | 50 | - | - |
| Weight Average Molecular Weight x $10^3$ | 46 | 51 | 42 | 40 | 38 | 44 | 50 | 48 | 46 | 49 |

Method for calculating a compounding ratio: In order to understand the compounding ratio of each monomer incorporated in an obtained copolymer, the ratio of the compound B is calculated in the form of a salt.

(Calculation example of the compounding ratio in Example 1)

The compound A-1: 98.2 g (the solid content: 98.2x0.6=58.9).

The compound B: 72.0 g (the solid content: 108 (molecular formula of sodium methacrylate)$\times$72 g/86(molecular formula of methacrylic acid)=90.4 g).

The compound C: 60.9 g, and the compound D: 183 g, each of which is 100 percent of the solid content.

The compound A: compound B: compound C: compound D=58.9: 90.4: 60.9: 183 (in solid content)=15 percent by weight: 23 percent by weight: 15 percent by weight: 47 percent by weight.

*1 Values of the compounds A to C in the table are represented by parts by weight on a solid content basis.
*2 methoxypolyethylene glycol methacrylate (molecular weigh of 250)
*3 methoxypolyethylene glycol methacrylate (molecular weight of 1000)
*4 methoxypolyethylene glycol acrylate (molecular weight of 250)
*5 methoxypolyethylene glycol acrylate (molecular weight of 1000)
*6 methoxypolyethylene glycol methacrylate (molecular weight of 2000)
*7 ethoxypolyethylene glycol methacrylate (molecular weight of 3000)
*8 methoxypolyethylene glycol methacrylate (molecular weight of 4000)

Comparative Examples 1 to 4

Condensate compounds were synthesized in the same method as that in Example 1 except that the reaction proportion of the dibasic acid (x moles) and that of methacrylic acid (y moles) with respect to 1.0 mole of the polyalkylene polyamine were set in the out of the range represented by $0.6<y/(1-x)<1.4$ so that the above condensates were out of the scope of the present invention (compounds A'-1 to A'-4). In Table 3, the compounding ratios of components used in the synthetic examples are shown. Subsequently, the compounds A'-1 to A'-4 were copolymerized with the compounds B, C and D, thereby obtaining water-soluble amphoteric copolymers (comparative examples 1 to 4). In Table 4, the compounding ratios of components used for the synthetic examples are shown.

Table 3 Synthetic Examples *1 of Comparative Compounds A'-1 to A'-4

| Comparative Compound A' | | A'-1 | A'-2 | A'-3 | A'-4 |
|---|---|---|---|---|---|
| (a) | DETA *2 | 1.00 | - | 1.00 | 1.00 |
| | TETA *3 | - | 1.00 | - | - |
| (b) | Adipic Acid | 0.66 | 0.83 | 0.83 | 0.66 |
| Acid Value of Intermediate Condensate *4 | | 20 | 17 | 15 | 23 |
| (c) | Acrylic Acid | - | - | 0.28 | - |
| | Methacrylic Acid | 0.14 | 0.30 | - | 0.68 |
| y/(1-x) | | 0.4 | 1.8 | 1.7 | 2.0 |
| Acid value of Final Condensate *5 | | 17 | 22 | 20 | 28 |

(continued)

| Comparative Compound A' | | A'-1 | A'-2 | A'-3 | A'-4 |
|---|---|---|---|---|---|
| (d) | Ethylene Oxide | 3.0 | 3.0 | 4.0 | 1.0 |

*1 Components (a) to (d) used for producing the compounds A'. shown in the Table correspond to the compounds (a) to (d) described above, and the values each represent a molar ratio.
*2 Diethylenetriamine
*3 Triethylenetetramine
*4 Acid value of the condensate (intermediate condensate) of the compounds a and b
*5 Acid value of the condensate (final condensate) of the compounds a, b and c

Table 4 Comparative Examples 1 to 4 *1

| Comparative Example No. | 1 | 2 | 3 | 4 |
|---|---|---|---|---|
| Compound A' | | | | |
| A'-1 | 15 | - | - | - |
| A'-2 | - | 15 | - | - |
| A'-3 | - | - | 15 | - |
| A'-4 | - | - | - | 15 |
| Compound B | | | | |
| Na Methacrylate | 23 | 23 | 23 | 23 |
| Compound C | | | | |
| C-2 *2 | 15 | 15 | 15 | 15 |
| Compound D | | | | |
| D-1 *3 | 47 | 47 | 47 | 47 |

In Table 4, recipes are determined in accordance with the compounding-ratio calculation method shown in Table 2.

*1 Values of the compounds A', the compounds B and the compounds C in the Table are represented by parts by weight on a solid content basis.
*2 methoxypolyethylene glycol methacrylate (molecular weight of 1,000)
*3 methoxypolyethylene glycol methacrylate (molecular weight of 2,000)

Synthetic Results of Comparative Examples 1 to 4

Table 5

| | Example 1 | Comparative Example 1 | Comparative Example 2 | Comparative Example 3 | Comparative Example 4 |
|---|---|---|---|---|---|
| State of polymer | Uniform aqueous solution | Uniform aqueous solution | Uniform aqueous solution | gelled | gelled |
| Judgement of GPC *1 | ○ | ○ | Δ | Measurement not available | Measurement not available |

(continued)

| | Example 1 | Comparative Example 1 | Comparative Example 2 | Comparative Example 3 | Comparative Example 4 |
|---|---|---|---|---|---|
| Reaction proportion of Compound *2 | 1 time | 0.47 time | 1.6 times | Measurement not available | Measurement not available |
| *1 ○ ... No shoulder recognized in a high molecular weight region.<br>Δ ... shoulder recognized as a peak in a high molecular weight region.<br>*2 Reaction proportion calculated when the reaction proportion of the compound A in Example 1 is set to be 1. | | | | | |

When the number of molecules (x moles) of the dibasic acid or an ester of the dibasic acid with a lower alcohol having 1 to 4 carbon atoms, which formed the compound A', and the number of molecules (y moles) of acrylic acid or methacrylic acid, or an ester of acrylic acid or methacrylic acid with a lower alcohol having 1 to 4 carbon atoms was represented by 0.6 ≧ y/(1-x), the reaction proportion of the compound A' in the water-soluble amphoteric copolymer was extremely decreased, and in a case of y/(1-x) ≧ 1.4 was satisfied, the molecular weight was increased, and furthermore, gelation occurred.

Comparative Examples 5 to 9

The compounds A-1 to A-3, and A-6, were copolymerized with the compound B, the compound C, and the compound D by the following ratios, and water-soluble amphoteric copolymers (comparative examples 5 to 9) having polyalkylene glycole chain of a single chain length were obtained.

Table 6 Comparative Examples 5 to 9 *1

| Comparative Example No. | 5 | 6 | 7 | 8 | 9 |
|---|---|---|---|---|---|
| Compound A | | | | | |
| A-1 | 15 | - | - | - | - |
| A-2 | - | - | 15 | - | - |
| A-3 | - | 5 | - | - | - |
| A-6 | - | - | - | 15 | - |
| Compound B | | | | | |
| Na Methacrylate | 23 | 14 | 23 | 23 | 23 |
| Compound C | | | | | |
| C-1 *2 | - | - | - | 62 | 10 |
| C-2 *3 | - | - | 62 | - | 67 |
| Compound D | | | | | |
| D-1 *4 | 62 | - | - | - | - |
| D-3 *5 | - | 81 | - | - | - |
| Weight Average Molecular Weight x $10^3$ | 48 | 44 | 50 | 54 | 52 |

In Table 6, recipes are determined in accordance with the compounding-ratio calculation method shown in Table 2.

*1 Values of the compounds A to D in the table are represented by parts by weight on a solid content basis.
*2 methoxypolyethylene glycol methacrylate (molecular weight of 250)
*3 methoxypolyethylene glycol methacrylate (molecular weight of 1000)
*4 methoxypolyethylene glycol methacrylate (molecular weight of 2000)
*5 methoxypolyethylene glycol methacrylate (molecular weight of 4000)

Test Example 1: Mortar Flow Test

<Preparation of Sample>

Ordinary Portland cement (manufactured by Taiheiyo Cement Corp.) in an amount of 200 g, and 260 g of siliceous sand No. 6 (manufactured by Nippon Plaster Inc.) were weighed, and dry mixing was performed for 90 seconds. Next, 0.448 g (on a solid content basis) of each of the copolymers obtained in Examples 1 to 10 and Comparative Examples 5 to 8 was weighed and was then diluted with water to have a total volume of 80 g, thereby preparing kneading water (water/cement ratio of 40%, and sand/cement ratio of 130%). The mixture of the cement and the sand was charged in the kneading water and mixed together for 180 seconds, thereby forming a mortar paste. Conditions of the dry mixing and the mixing for mortar formation were very carefully performed so as to always obtain uniform materials.

<Measurement and Results of measurement>

The mortar thus prepared was poured into a hollow cylindrical container and charged up to the top end of the container, the container having 0 50 mm and H 50 mm and being placed on a plate made of an acrylic resin. Immediately after charging, the hollow cylindrical container was lifted up at a predetermined rate in a direction perpendicular to the acrylic resin-made plate. After the mortar stopped spreading and completely stood still, the maximum diameter of the spread of the mortar and the diameter perpendicular thereto were measured, and the average was obtained from the two diameters thus measured. The procedure described above was performed immediately after the formation of the mortar paste and also performed after 60 minutes and 120 minutes. When the measurement was performed after 60 and 120 minutes, in order to prevent the evaporation of moisture, a container containing the mortar was covered with a plastic sheet and was placed still, and right before the measurement, the mortar was again mixed for 90 seconds and was then charged into the hollow container.

Table 7

| Copolymer | Mortar flow value (mm) | | | Evaluation of water reducing property *1 | Evaluation of slump flow retention *2 |
|---|---|---|---|---|---|
| | Immediately after formation | After 60 minutes | After 120 minutes | | |
| Example 1 | 125 | 109 | 95 | ○ | Δ |
| Example 2 | 117 | 106 | 95 | Δ | ○ |
| Comparative Example 5 | 111 | 96 | 84 | Δ | Δ |
| Comparative Example 7 | 108 | 101 | 96 | × | ○ |
| *1 Water Reducing Performance Not less than 120 is represented by ○, 110 to less than 120 is represented by Δ, and 100 to less than 110 is represented by ×.<br>*2 Performance of Slump Flow Retention | | | | | |

When values of I (Mortar flow immediately after formation)-(Mortar Flow after 2 hours) I are less than 25, 25 to less than 30, and 30 or more, they are represented by ○, Δ and ×, respectively.

The copolymer of Example 1 containing the compound C-2 and the compound D-1 in one molecule of the copolymer and the copolymer of Example 2 containing the compound C-1 and the compound D-1 in one molecule of the copolymer showed superior water reducing property and slump flow retention as compared to those of the copolymer of Comparative Example 5 containing only the compound D-1 and the copolymer of Comparative Example 7 containing only the compound C-2.

Table 8

| | Mortar flow value (mm) | | | Evaluation of water reducing property *1 | Evaluation of slump flow retention *2 |
|---|---|---|---|---|---|
| Copolymer | Immediately after formation | After 60 minutes | After 120 minutes | | |
| Example 3 | 175 | 173 | 173 | ○ | ◎ |

(continued)

| Copolymer | Mortar flow value (mm) | | | Evaluation of water reducing property *1 | Evaluation of slump flow retention *2 |
|---|---|---|---|---|---|
| | Immediately after formation | After 60 minutes | After 120 minutes | | |
| Example 4 | 177 | 174 | 177 | ○ | ◎ |
| Example 5 | 178 | 178 | 183 | ○ | ◎ |
| Example 6 | 185 | 181 | 176 | ◎ | ○ |
| Example 7 | 170 | 163 | 152 | Δ | Δ |
| Example 8 | 188 | 180 | 174 | ◎ | Δ |
| Example 9 | 181 | 178 | 168 | ○ | Δ |
| Example 10 | 177 | 170 | 162 | ○ | Δ |
| Comparative Example 6 | 189 | 180 | 144 | ◎ | × |
| Comparative Example 9 | 123 | 116 | 107 | × | Δ |

*1 Water Reducing Property When the mortar flow immediately after the formation are 185 or more, 175 to less than 185, 170 to less than 175, and less than 170, they are represented by ◎, ○, Δ and ×, respectively.

*2 Performance of Slump Flow Retention When values of I(Mortar flow immediately after formation)-(Mortar Flow after 2 hours) I are less than 5, 5 to less than 10, 10 to less than 20, and 20 or more, they are represented by ◎, ○, Δ and ×, respectively.

The copolymers obtained in Examples 3 to 10 showed superior well-balanced water reducing property and slump flow retention in the mortar flow test, and on the other hand, the copolymer only containing the compound D-3 which was a long-chain alkylene glycol group of the copolymer obtained in Comparative Example 6 had an improved water reducing property but had seriously degraded slump flow retention, the above copolymer. Since it has been well known that even when the same sample was used for the mortar flow test and the concrete flow test, the test results of the water reducing property, the slump flow retention and the concrete viscosity were changed between the two tests; therefore, in order to more precisely evaluate the performance obtained in the above mortar test, the concrete test was further implemented.

Test Example 2: Concrete Test

Concrete formulations used in concrete tests 1 to 4 are shown in the following table.

Table 9

| Formulation No. | Formulation -1 | Formulation -2 | Formulation -3 | Formulation -4 |
|---|---|---|---|---|
| W/B (%) | 20.0 | 15.0 | 12.0 | 30.0 |
| Water | 145 | 150 | 153 | 145 |
| Binder *1 | 725 | 1000 | 1275 | 485 |
| Fine aggregate *2 | 712 | 462 | 219 | 805 |
| Course aggregate *3 | 875 | 875 | 875 | 986 |

Unit: $kg/m^3$

*1: Formulations-1 to 3, Silica fume cement (density: 3.08 $g/cm^3$) Formulation-4, ordinary Portland cement (density: 3.15 $g/cm^3$)

*2: Crushed sand (density: 2.64 $g/cm^3$)

*3: Hard crushed stone (density: 2.65 $g/cm^3$)

Concrete Test 1

Test conditions:

Water Binder Ratio (W/B) = 20%

In this test, the Formulation-1 was used among the Formulations shown in Table 9.

Table 10

| Copolymer | W/B (%) | Addition amount B x % | Aging time (min.) | Slump flow (cm x cm) | 50 cm flow time | Setting time Start/ end | Strength after 1 day N/mm$^2$ |
|---|---|---|---|---|---|---|---|
| Example 3 | 20% | 0.48 | 0 | 70.5 x 65.5 | 10.5 | 7-36/ 8-46 | 21.3 |
| | | | 30 | 71.0 x 69.5 | 11.0 | | |
| | | | 60 | 68.5 x 68.0 | 11.6 | | |
| | | | 90 | 68.0 x 65.5 | 12.1 | | |
| Example 4 | 20% | 0.47 | 0 | 67.0 x 65.0 | 11.9 | 7-24/ 8-35 | 21.0 |
| | | | 30 | 72.0 x 71.5 | 12.5 | | |
| | | | 60 | 70.0 x 70.0 | 13.0 | | |
| | | | 90 | 70.5 x 68.5 | 13.9 | | |
| Example 5 | 20% | 0.47 | 0 | 69.5 x 68.0 | 11.2 | 7-21/ 8-23 | 20.6 |
| | | | 30 | 73.0 x 72.5 | 12.2 | | |
| | | | 60 | 71.5 x 70.0 | 12.9 | | |
| | | | 90 | 71.0 x 68.5 | 13.5 | | |
| Comparative Example 7 | 20% | 0.48 | 0 | 63.5 x 63.5 | 10.6 | 8-40/ 10-06 | 16.6 |
| | | | 30 | 65.0 x 64.5 | 12.2 | | |
| | | | 60 | 61.5 x 60.5 | 13.5 | | |
| | | | 90 | 54.5 x 51.0 | out of range | | |

In the table, the addition amount represents the portion of the solid content of the dispersant to the binder.

As can been seen from the results, in the concrete test in a region having a low water/binder ratio (W/B=20%), the copolymers of Examples 3 to 5 showed superior water reducing property, slump flow retention, rapid setting, and strength development and, in addition, also showed superior concrete viscosity.

Concrete Test 2

Test conditions:

Water/Binder Ratio (W/B) = 15%

In this test, the Formulation-2 was used among the formulations shown in Table 9.

Table 11

| Copolymer | W/B (%) | Addition amount B x % | Aging time (min.) | Slump flow (cm x cm) | 50 cm flow time | Setting time start/ end | Mortal kneading time |
|---|---|---|---|---|---|---|---|
| Example 4 | 15% | 0.56 | 0 | 74.0 x 73.5 | 10.3 | 7-48/ 9-08 | 160 seconds |
| | | | 45 | 72.0 x 71.5 | 13.0 | | |
| | | | 90 | 75.0 x 74.5 | 14.0 | | |
| Example 6 | 15% | 0.49 | 0 | 74.0 x 73.0 | 10.6 | 9-55/ 10-57 | 120 seconds |
| | | | 45 | 72.0 x 70.0 | 12.2 | | |
| | | | 90 | 71.0 x 69.5 | 13.5 | | |
| Example 8 | 15% | 0.53 | 0 | 74.0 x 72.5 | 10.4 | 10-21/ 11-45 | 160 seconds |
| | | | 45 | 70.0 x 70.0 | 12.5 | | |
| | | | 90 | 68.5 x 68.0 | 15.0 | | |
| Comparative Example 7 | 15% | 0.62 | 0 | 65.0 x 65.0 | 13.2 | 12-04/ 13-16 | 180 seconds |

In the table, the addition amount represents the portion of the solid content of the dispersant to the binder. Mortar Kneading Time: Time from the start of kneading until complete mortar is obtained is evaluated by visual inspection.

Even in a region in which the water/binder ratio (W/B=15%) was low, according to the copolymers of Examples 4, 6 and 8, superior water reducing property, slump flow retention, and rapid strength development were obtained, and in addition, a low concrete viscosity could be maintained. Furthermore, the time required for obtaining a uniform mortar was short, and the time required for obtaining a well-conditioned concrete was also short.

Concrete Test 3

Test conditions:

Water/Binder Ratio (W/B) = 12%

In this test, the Formulation-3 was used among the formulations shown in Table 9.

Table 12

| Copolymer | W/B (%) | Addition amount B x % | Aging time (min.) | Slump flow (cm x cm) | 50 cm flow time | Setting time start/ end |
|---|---|---|---|---|---|---|
| Example 4 | 12% | 0.80 | 0 | 73.5 x 73.0 | 15.1 | 13-15/ 14-34 |
| | | | 45 | 73.5 x 72.5 | 17.8 | |
| | | | 90 | 75.5 x 76.5 | 19.2 | |
| Example 6 | 12% | 0.73 | 0 | 74.0 x 72.5 | 15.6 | 15-27/ 16-45 |
| | | | 45 | 73.5 x 73.5 | 17.5 | |
| | | | 90 | 72.5 x 70.5 | 18.9 | |
| Example 8 | 12% | 0.76 | 0 | 74.5 x 73.0 | 15.3 | 16-32/ 17-55 |
| | | | 45 | 72.5 x 72.0 | 17.5 | |
| | | | 90 | 71.5 x 70.0 | 21.0 | |
| Comparative Example 7 | 12% | 1.04 | 0 | 69.5 x 67.0 | 21.6 | 20-15/ 21-32 |

In the Table, the addition amount represents the proportion of the solid content of the dispersant to the binder.

In concrete in a region in which the water/binder ratio (W/B=12%) was further decreased, the addition amount of the dispersant had to be extremely increased, and as a result, the time required for setting was extremely late. According to the copolymers of Examples 4, 6, and 8, superior water reducing property, slump flow retention, and rapid setting property were obtained, and in addition, the concrete viscosity was superior.

Concrete Test 4

Test conditions:

Water/Cement Ratio (W/C)=30%

In this test, the Formulation-4 was used among the formulations shown in Table 9.

Table 13

| Copolymer | W/B (%) | Addition amount C x % | Aging time (min.) | Slump flow (cm x cm) | 50 cm flow time | Setting time start/ end |
|---|---|---|---|---|---|---|
| Example 4 | 30% | 0.11 | 0 | 51.0 x 48.0 | out of range | 3-59/ 5-31 |
| | | | 5 | 42.5 x 42.0 | out of range | |
| Comparative Example 8 | 30% | 0.25 | 5 | 62.0 x 60.5 | 5.9 | 8-12/ 10-08 |
| | | | 30 | 66.5 x 66.5 | 6.9 | |
| | | | 60 | 62.0 x 61.0 | 7.6 | |
| | | | 90 | 55.0 x 51.0 | out of range | |
| Example 4 + Comparative Example 8 | 30% | Example 4 0.03 Comparative Example 8 0.22 | 0 | 65.0 x 64.5 | 5.3 | 7-56/ 9-55 |
| | | | 30 | 66.0 x 64.0 | 6.5 | |
| | | | 60 | 61.5 x 60.5 | 7.3 | |
| | | | 90 | 56.0 x 50.5 | out of range | |

In the Table, the addition amount represents the portion of the solid content of the dispersant to the binder.

When the copolymer of Example 4 of the present invention was only used in a region in which the water cement ratio (W/C=30%) was high, the slump flow retention was extremely decreased. However, the copolymer described above can be preferably used for a secondary concrete product which does not primarily require the slump flow retention, and when being compounded with a common dispersant, a high initial water reducing property, a rapid setting time, and an effect of decreasing the concrete viscosity can be obtained.

## Claims

1. A cement dispersant comprising a water-soluble amphoteric copolymer, or a partly or a fully neutralized salt thereof, the copolymer being formed by copolymerizing a monomer mixture containing as a primary monomer component, at least one compound (compound A) obtained by addition of 0 to 8 moles of an alkylene oxide having 2 to 4 carbon atoms with respect to one equivalent of amino residues in a polyamide polyamine obtained by condensation of 1.0 mole of a polyalkylene polyamine, 0.5 to 0.95 moles of a dibasic acid or an ester of dibasic acid with a lower alcohol having 1 to 4 carbon atoms, and 0.05 to 0.70 moles of acrylic acid or methacrylic acid, or an ester of acrylic acid or methacrylic acid with a lower alcohol having 1 to 4 carbon atoms; at least one compound (compound B) represented by general formula (1)

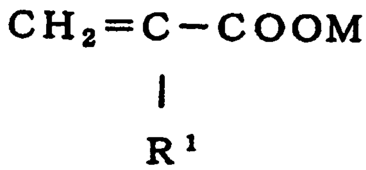

(1)

(in the formula, $R^1$ represents a hydrogen atom or a methyl group, and M represents a hydrogen atom, an alkali metal, an alkali earth metal, an ammonium group, or an alkanol ammonium);
at least one compound (compound C) represented by general formula (2)

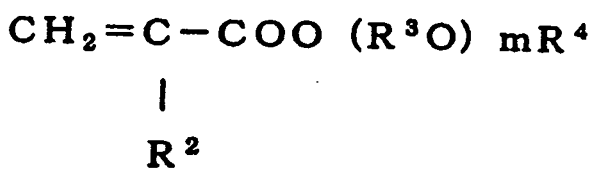

(2)

(in the formula, $R^2$ represents a hydrogen atom or a methyl group, $R^3$ represents an alkylene group having 2 to 4 carbon atoms, $R^4$ represents a hydrogen atom or an alkyl group having 1 to 4 carbon atoms, and m represents the number of addition molecules of a polyalkylene glycol and is an integer of 1 to 35); and
at least one compound (compound D) represented by general formula (3)

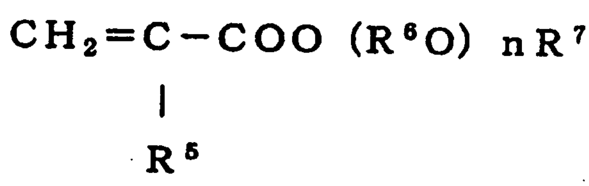

(3)

(in the formula, $R^5$ represents a hydrogen atom or a methyl group, $R^6$ represents an alkylene group having 2 to 4 carbon atoms, $R^7$ represents a hydrogen atom or an alkyl group having 1 to 4 carbon atoms, and n represents the number of molecules of a polyalkylene glycol for addition and is an integer of 40 to 100).

**2.** The cement dispersant according to Claim 1, wherein, when the total of the compounds A to D is set to be 100 percent by weight, the water-soluble amphoteric copolymer is obtained by copolymerizing 5 to 25 percent by weight of the compound A, 5 to 30 percent by weight of the compound B, 5 to 40 percent by weight of the compound C, and 20 to 80 percent by weight of the compound D.

**3.** The cement dispersant according to Claim 1 or 2, wherein, when the number of molecules of the dibasic acid or the ester of the dibasic acid with a lower alcohol having 1 to 4 carbon atoms is represented by x, and the number of molecules of acrylic acid or methacrylic acid, or the ester of acrylic acid or methacrylic acid with a lower alcohol having 1 to 4 carbon atoms is represented by y with respect to 1.0 molecule of the polyalkylene polyamine, conditions of the following equation: $0.6<y/(1-x)<1.4$ are satisfied.

**4.** A concrete admixture for mortar and concrete, comprising a mixture which contains the cement dispersant according to one of Claims 1 to 3 and at least one additive for mortar and concrete selected from the group consisting of a cement dispersant different from said cement dispersant, a defoaming agent and an air-entraining agent.

**5.** A concrete composition comprising the cement dispersant according to one of Claims 1 to 3.

**6.** A concrete composition comprising the cement admixture for mortar and concrete according to Claim 4.

7. The concrete composition according to Claim 5 or 6, wherein the concrete composition is used for ultrahigh performance concrete.

## INTERNATIONAL SEARCH REPORT

International application No.
PCT/JP2004/009030

**A. CLASSIFICATION OF SUBJECT MATTER**
Int.Cl[7] C04B24/26, C04B28/02//C08L33/14

According to International Patent Classification (IPC) or to both national classification and IPC

**B. FIELDS SEARCHED**

Minimum documentation searched (classification system followed by classification symbols)
Int.Cl[7] C04B24/26, C04B28/02-28/12

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 03/91180 A1 (NIPPON SHOKUBAI CO., LTD.), 06 November, 2003 (06.11.03), Claim 10; page 2, line 31 to page 3, line 4; page 16, lines 23 to 30; page 23, lines 21 to 31; page 28, line 11 to page 30, line 16; page 37, line 11 to page 38, line 12; page 64, line 33 to page 65, line 10; page 65, line 32 to page 66, line 12; page 67, line 29 to page 68, the last line; page 87, line 24 to page 91, line 17; pages 113 to 114 (preparation examples 16, 17) & JP 2004-2174 A Claim 3; Par. Nos. [0006], [0023], [0025], [0035] to [0038], [0051] to [0055], [0060] to [0061], [0092] to [0100], [0107] to [0108] | 1-7 |

☐ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 September, 2004 (16.09.04) | 05 October, 2004 (05.10.04) |
| Name and mailing address of the ISA/ Japanese Patent Office | Authorized officer |
| Facsimile No. | Telephone No. |

Form PCT/ISA/210 (second sheet) (January 2004)